# EUROPEAN PATENT APPLICATION

(11) **EP 4 717 943 A1**
(43) Date of publication of application: **01.04.2026**
(21) Application number: 24811139.5
(22) Date of filing: 22.05.2024
(51) Int. Cl.: F16F 1/12, F16F 9/32

(54) **COVERING TUBE AND SPRING MEMBER**

(30) Priority: 23.05.2023 JP 2023084934
(71) Applicant: NHK Spring Co., Ltd., Yokohama-shi, Kanagawa 236-0004 (JP)
(72) Inventor: HASUMI, Satoshi, Yokohama-shi, Kanagawa 236-0004 (JP); KATAYAMA, Yosuke, Yokohama-shi, Kanagawa 236-0004 (JP); KATO, Tomotake, Yokohama-shi, Kanagawa 236-0004 (JP); WAKEBE, Masaya, Yokohama-shi, Kanagawa 236-0004 (JP); MATSUDA, Tsuyoshi, Yokohama-shi, Kanagawa 236-0004 (JP); ARISAKA, Norifumi, Yokohama-shi, Kanagawa 236-0004 (JP)
(74) Representative: Hoffmann Eitle
(86) International application number: PCT/JP2024/018826
(87) International publication number: WO 2024/242133

(57) **Abstract**

A covering tube according to the present invention is a covering tube for covering a wire member, the covering tube including: a covering portion that covers a part of the wire member in a circumferential direction, the covering portion having a tubular shape in which a part of the covering tube in the circumferential direction is opened; a first claw portion extending from a first end of an opening end of the covering portion; and a second claw portion extending from a second end of the opening end of the covering portion, in which tips of the first and second claw portions are separated from each other.

## Description

### Field

The present invention relates to a covering tube and a spring member.

### Background

In the related art, a coil spring is used as a spring member used in a suspension device or the like of a vehicle. A coil spring is generally formed by winding a wire member having a circular cross section (see, for example, Patent Literatures 1 and 2). In addition, the coil spring is provided with a covering tube in order to suppress abnormal noise generated by contact between portions of the wire member when compressed by vibration, impact, or the like.

In recent years, in order to reduce the weight and to improve the workability, a coil spring is formed using a wire member partially having a rectangular cross section (see, for example, Patent Literature 3).

### Citation List

### Patent Literature

Patent Literature 1: Japanese Utility Model Application Laid-open No. S55-034520
Patent Literature 2: JP 2003-206968 A
Patent Literature 3: WO 2022/123960 A

### Summary

### Technical Problem

However, applying a covering tube used for a wire member having a circular cross section to a wire member having a rectangular cross section may generate an intermittent gap between the wire member and the covering tube, whereby the durability of the covering tube may be deteriorated due to friction or the like generated between the wire member and the covering tube. In addition, it is required that the covering tube can efficiently cover the wire member.

The present invention has been made in view of the above, and an object thereof is to provide a covering tube and a spring member that have durability and can efficiently cover a wire member.

### Solution to Problem

To solve the above-described problem and achieve the object, a covering tube according to the present invention covers a wire member, and includes: a covering portion configured to cover a part of the wire member in a circumferential direction, the covering portion having a tubular shape in which a part of the covering tube in the circumferential direction is opened; a first claw portion extending from a first end of an opening end of the covering portion; and a second claw portion extending from a second end of the opening end of the covering portion, wherein tips of the first and second claw portions are separated from each other.
moreover, in the above-described covering tube according to the present invention, a length of each of the first and second claw portions extending from the covering portion is less than or equal to three times a thickness of the covering portion.
moreover, in the above-described covering tube according to the present invention, the first and second claw portions extend toward each other and away from a hollow space formed by the covering portion.
moreover, in the above-described covering tube according to the present invention, surfaces facing each other among outer surfaces of the covering portion have an uneven shape.

A spring member according to the present invention includes: a coil spring made of a spirally wound wire member; and a covering tube configured to cover a part of the coil spring, wherein the coil spring includes a deformed region provided at least at one end and having at least two corners in a cross section having a plane orthogonal to a longitudinal direction of the wire member as a cut surface, the covering tube includes: a covering portion configured to cover a part of the deformed region in a circumferential direction, the covering portion having a tubular shape in which a part of the covering tube in the circumferential direction is opened, a first claw portion extending from a first end of an opening end of the covering portion, and a second claw portion extending from a second end of the opening end of the covering portion, and the first and second claw portions have tips separated from each other.

Moreover, in the above-described spring member according to the present invention, surfaces facing each other among outer surfaces of the covering portion and/or surfaces facing the coil spring have an uneven shape. Advantageous Effects of Invention

According to the present invention, it is possible to obtain a covering tube having durability and capable of effectively covering a wire member.

### Brief Description of Drawings

[FIG. 1] FIG. 1 is a perspective view illustrating the structure of a part of a spring member according to an embodiment of the present invention.
[FIG. 2] FIG. 2 is a perspective view illustrating the structure of a coil spring included in the spring member according to the embodiment of the present invention.
[FIG. 3] FIG. 3 is a cross-sectional view of the spring member according to the embodiment of the present invention.
[FIG. 4] FIG. 4 is a plan view illustrating the structure of a covering tube included in the spring member according to the embodiment of the present invention.
[FIG. 5] FIG. 5 is a cross-sectional view taken along line A-A illustrated in FIG. 4.
[FIG. 6] FIG. 6 is a cross-sectional view of a spring member according to a first modification of the embodiment of the present invention.
[FIG. 7] FIG. 7 is a cross-sectional view of a spring member according to a second modification of the embodiment of the present invention.
[FIG. 8] FIG. 8 is a cross-sectional view of a coil spring included in a spring member according to a third modification of the embodiment of the present invention.
[FIG. 9] FIG. 9 is a cross-sectional view of a coil spring included in a spring member according to a fourth modification of the embodiment of the present invention. Description of Embodiments

Hereinafter, modes for carrying out the present invention (hereinafter, referred to as "embodiments") will be described with reference to the accompanying drawings. Note that the drawings are schematic, and the relationship between the thickness and the width of each portion, the ratio of the thickness between portions, and the like may be different from actual ones, and the drawings may include portions having mutually different dimensional relationships or ratios.

### (Embodiment)

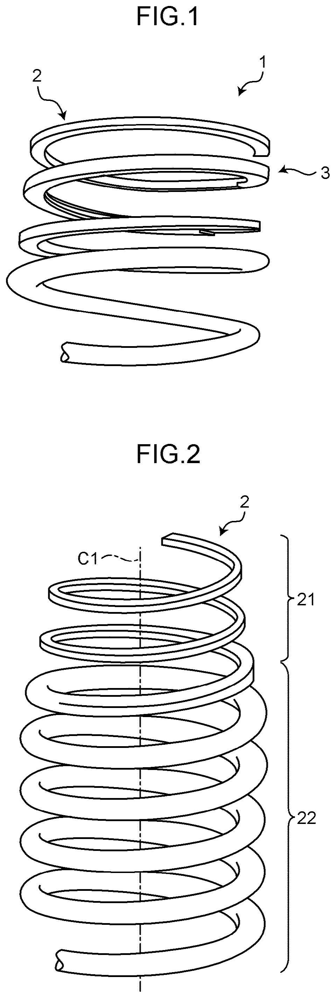

FIG. 1 is a perspective view illustrating the structure of a part of a spring member according to an embodiment of the present invention. A spring member 1 includes a coil spring 2, which is formed by spirally winding a wire member, and a covering tube 3 covering a part of the coil spring 2.

FIG. 2 is a perspective view illustrating the structure of the coil spring included in the spring member according to the embodiment of the present invention. The coil spring 2 is formed by, for example, spirally winding a wire member made of spring steel around a predetermined axis. In the present embodiment, an example in which the predetermined axis coincides with a central axis C1 of the coil spring 2 will be described.

The coil spring 2 includes a first end turn portion 21 including a first end of the coil spring 2, a second end turn portion (not illustrated) included at a second end of the coil spring 2, and an effective portion 22 included between the first end turn portion 21 and the second end turn portion. In the first end turn portion 21, in a cross section having a plane orthogonal to the longitudinal direction of the wire member as a cut surface, the shape formed by the outer edge is rectangular. In the effective portion 22, the shape formed by the outer edge forms a circle in a cross section having a plane orthogonal to the longitudinal direction of the wire member as a cut surface. FIG. 2 illustrates an example in which the cross-sectional area of the wire member of the first end turn portion 21 is smaller than the cross-sectional area of the wire member of the effective portion 22; however, the present invention is not limited thereto.

Note that the second end turn portion may have a cross-sectional shape similar to that of the effective portion 22, may have a cross-sectional shape similar to that of the first end turn portion 21, or may have a cross-sectional shape different from these.

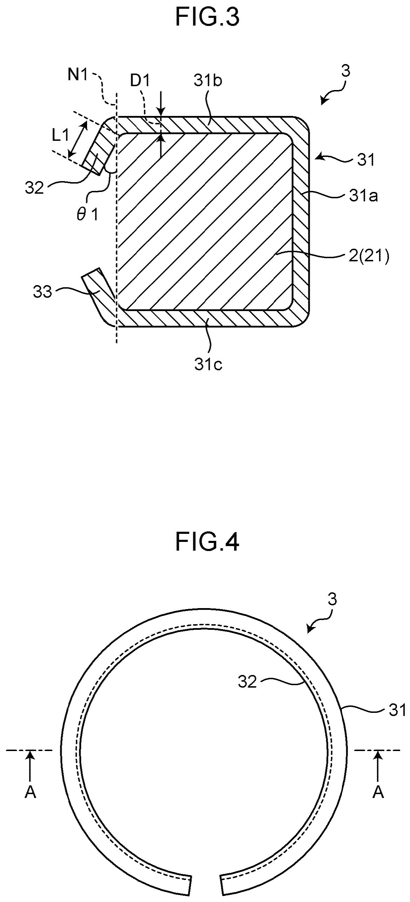

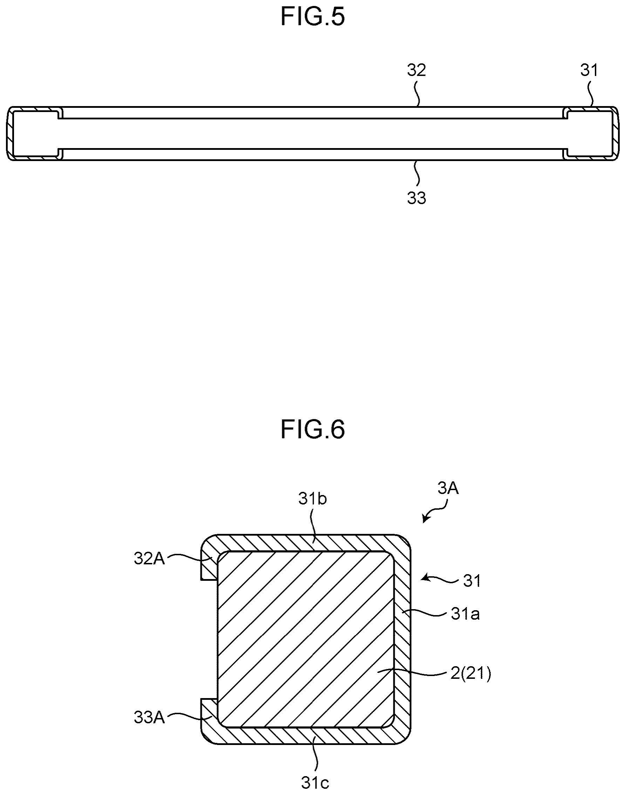

FIG. 3 is a cross-sectional view of the spring member according to the embodiment of the present invention. FIG. 4 is a plan view illustrating the structure of a covering tube included in the spring member according to the embodiment of the present invention. FIG. 5 is a cross-sectional view taken along line A-A illustrated in FIG. 4. The covering tube 3 has a tubular shape having a slit formed along the longitudinal direction. The covering tube 3 has an annular shape partially opened in a state where no load other than the gravity is applied, for example.

The covering tube 3 has a length corresponding to one winding of the coil spring 2, for example. In the example illustrated in FIG. 1, the covering tube 3 is provided at a second winding from the upper end of the coil spring 2. Disposing the covering tube 3 in the second winding enables the covering tube 3 to suppress abnormal noise due to the contact when the first winding and the second winding of the coil spring 2 come into contact with each other and enables the covering tube 3 to suppress abnormal noise due to the contact when the second winding and a third winding of the coil spring 2 come into contact with each other.

The covering tube 3 includes a covering portion 31 covering a part of the wire member and having a tubular shape in which a part of the covering tube 3 in the circumferential direction is opened, a first claw portion 32 extending from a first end of the covering portion 31, and a second claw portion 33 extending from a second end of the covering portion 31. In this example, the circumferential direction of the covering tube 3 corresponds to a direction around an axis extending in the longitudinal direction of the covering tube 3.

In the covering portion 31, a cross section having a plane orthogonal to the longitudinal direction of the covering tube 3 as a cut surface has a shape along side surfaces of the first end turn portion 21, the shape having a bottomed cylindrical shape along three surfaces among four surfaces constituting a cross section of the first end turn portion 21. That is, the covering portion 31 covers three side surfaces among the four side surfaces of the wire member constituting the coil spring 2. Specifically, the covering portion 31 includes a first side surface portion 31a forming one side surface of the covering tube 3, a second side surface portion 31b extending from a first end of the first side surface portion 31a in the circumferential direction of the covering tube 3, and a third side surface portion 31c extending from a second end of the first side surface portion 31a in the circumferential direction of the covering tube 3. The second side surface portion 31b and the third side surface portion 31c are bent from the extending ends from the first side surface portion 31a toward a mutually approaching side (facing side).

Note that the covering portion 31 may be formed with a hole penetrating in the thickness direction and capable of discharging a liquid that has entered the inside of the covering portion 31.

The first claw portion 32 extends from an end (one end of the open end) of the second side surface portion 31b on a side opposite to the side continuous with the first side surface portion 31a. A length L1 (see FIG. 3) of the first claw portion 32 extending from the second side surface portion 31b is preferably greater than or equal to a thickness D1 of the covering portion 31 and less than or equal to three times the thickness D1. Note that the thickness D1 is a thickness at a straight portion of the covering portion 31. Alternatively, the thickness D1 may be an average value in the cross section of the covering portion 31 (for example, an average value of a plurality of any positions), a most frequent value, a design value or an average value of the thickness of the entire covering tube 3 or the claw portions.

In the first claw portion 32, an inclination angle θ1 with respect to a straight line N1 passing through an extending end of the first claw portion 32 in the second side surface portion 31b and an extending end of the second claw portion 23 in the third side surface portion 31c forms an acute angle. The inclination angle θ1 is preferably greater than 0 and less than or equal to 40° from the viewpoints of suppressing separation of the covering tube 3 from the coil spring 2 and attachability to the coil spring 2.

The second claw portion 33 extends from an end (the other end of the open end) of the third side surface portion 31c on a side opposite to the side continuous with the first side surface portion 31a. The shape and the extending manner of the second claw portion 33 are similar to those of the first claw portion 32.

The first claw portion 32 and the second claw portion 33 extend toward each other and away from a hollow space formed by the covering portion 31.

In the covering tube 3, the tips of the first claw portion 32 and the second claw portion 33 are separated from each other, and a gap formed by the first claw portion 32 and the second claw portion 33 separated from each other forms the slit.

In the embodiment of the present invention described above, the covering tube 3 having the covering portion 31, which has a shape extending along the outer peripheral surface of an end turn portion of the coil spring 2 and covers the end turn portion, and the first claw portion 32 and the second claw portion 33 each extending from one of the ends of the covering portion 31 in such a manner that the tips thereof are separated from each other is disposed in the end turn portion having a prismatic shape. According to the present embodiment, since the covering tube is attached to the end turn portion via the slit formed by the first claw portion 32 and the second claw portion 33 and the covering portion 31 is in close contact with the wire member, the durability of the covering tube can be secured, and the covering tube can efficiently cover the wire member.

In addition, according to the present embodiment, since the first claw portion 32 and the second claw portion 33 each extend by a length less than or equal to a length three times the thickness of the covering portion 31, both the handling property and the stability at the time of covering the wire member can be achieved.

In addition, according to the present embodiment, since the first claw portion 32 and the second claw portion 33 extend in the direction away from the covering portion 31, the covering portion 31 can be easily opened and enfolding of the first claw portion 32 and the second claw portion 33 into the covering portion 31 can be suppressed when the covering tube 3 is attached to the wire member, whereby the covering tube 3 can easily cover the wire member.

### (First Modification)

Next, a first modification of the embodiment of the present invention will be described with reference to FIG. 6. FIG. 6 is a cross-sectional view of a spring member according to the first modification of the embodiment of the present invention. The spring member according to the first modification includes a covering tube 3A instead of the covering tube 3 according to the embodiment. Hereinafter, portions different from those of the embodiment will be described, and the same components are denoted by the same reference numerals, and description thereof will be omitted.

The covering tube 3A has a tubular shape having a slit formed along the longitudinal direction. The length and the overall shape of the covering tube 3A are similar to those of the covering tube 3.

The covering tube 3A includes a covering portion 31 having a bottomed cylindrical shape, a first claw portion 32A extending from a first end of the covering portion 31, and a second claw portion 33A extending from a second end of the covering portion 31 in a cross section having a plane orthogonal to the longitudinal direction as a cut surface.

The first claw portion 32A extends from an end of a second side surface portion 31b on a side opposite to a side continuous with a first side surface portion 31a. It is preferable that an extension length L1 (see FIG. 3) of the first claw portion 32A from the second side surface portion 31b is greater than or equal to a thickness D1 of the covering portion 31 and less than or equal to three times the thickness D1.

In the first modification, the first claw portion 32A extends in a direction parallel to a straight line N1 (see FIG. 3) passing through an extending end of the first claw portion 32 in the second side surface portion 31b and an extending end of the second claw portion 33 in a third side surface portion 31c. That is, the inclination angle θ1 described above is zero in the first claw portion 32A.

The second claw portion 33A extends from an end of the third side surface portion 31c on a side opposite to a side continuous with the first side surface portion 31a. The shape and the extending manner of the second claw portion 33A are similar to those of the first claw portion 32A.

In the covering tube 3A, the tips of the first claw portion 32A and the second claw portion 33A are separated from each other, and a gap formed between the first claw portion 32A and the second claw portion 33A forms a slit.

In the first modification described above, the covering tube 3A having the covering portion 31, which has a shape extending along the outer peripheral surface of an end turn portion of the coil spring 2 and covers the end turn portion, and the first claw portion 32A and the second claw portion 33A each extending from one of the ends of the covering portion 31 in such a manner that the tips thereof are separated from each other is disposed in the end turn portion having a prismatic shape. According to the first modification, since the covering tube is attached to the end turn portion via the slit formed by the first claw portion 32A and the second claw portion 33A and the covering portion 31 is in close contact with the wire member, the durability of the covering tube can be secured, and the covering tube can efficiently cover the wire member.

### (Second Modification)

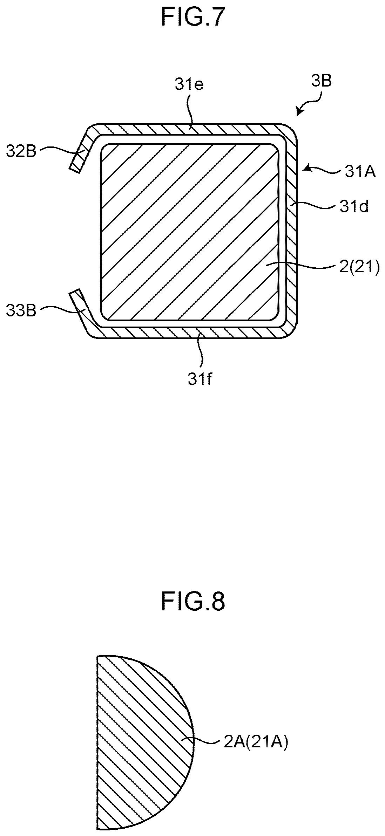

Next, a second modification of the embodiment of the present invention will be described with reference to FIG. 7. FIG. 7 is a cross-sectional view of a spring member according to the second modification of the embodiment of the present invention. The spring member according to the second modification includes a covering tube 3B instead of the covering tube 3 according to the embodiment. Hereinafter, portions different from those of the embodiment will be described, and the same components are denoted by the same reference numerals, and description thereof will be omitted.

The covering tube 3B has a tubular shape having a slit formed along the longitudinal direction. The length and the overall shape of the covering tube 3B are similar to those of the covering tube 3. The covering tube 3B includes a covering portion 31A having a bottomed cylindrical shape, a first claw portion 32B extending from a first end of the covering portion 31A, and a second claw portion 33B extending from a second end of the covering portion 31A in a cross section having a plane orthogonal to the longitudinal direction as a cut surface.

The covering portion 31A has a shape extending along a side surface of a first end turn portion 21, in a cross section having a plane orthogonal to the longitudinal direction as a cut surface, and has a shape extending along three surfaces among four surfaces constituting the cross section of the first end turn portion 21. Specifically, the covering portion 31 includes a first side surface portion 31d forming one side surface of the covering tube 3B, a second side surface portion 31e extending from a first end of the first side surface portion 31d in the circumferential direction of the covering tube 3B, and a third side surface portion 31f extending from a second end of the first side surface portion 31d in the circumferential direction of the covering tube 3B. The second side surface portion 31e and the third side surface portion 31f are bent from the extending ends from the first side surface portion 31d toward each other.

In the second modification, the space in which the first side surface portion 31d to the third side surface portion 31f are formed is larger than the size of the end turn portion to be covered, and a slight gap is formed when the covering tube 3B covers a wire member.

The first claw portion 32B extends from an end of the second side surface portion 31e on a side opposite to a side continuous with the first side surface portion 31d. In the first claw portion 32B, the extension length L1 (see FIG. 3) from the second side surface portion 31e is preferably less than or equal to three times the thickness of the covering portion 31A (corresponding to the thickness D1 described above). In the first claw portion 32B, an inclination angle (corresponding to the inclination angle θ1 described above) with respect to a straight line (corresponding to the straight line N1 illustrated in FIG. 3) passing through an extending end of the first claw portion 32B in the second side surface portion 31e and an extending end of the second claw portion 23 in the third side surface portion 31f forms an acute angle.

The second claw portion 33B extends from an end of the third side surface portion 31f on a side opposite to a side continuous with the first side surface portion 31d. The shape and the extending manner of the second claw portion 33B are similar to those of the first claw portion 32B.

In the covering tube 3B, the tips of the first claw portion 32B and the second claw portion 33B are separated from each other, and a gap formed between the first claw portion 32B and the second claw portion 33B forms a slit. In addition, in the covering tube 3B, the first claw portion 32B and the second claw portion 33B extend in a direction away from the covering portion 31A.

In the second modification described above, the covering tube 3B having the covering portion 31A, which has a shape extending along the outer peripheral surface of an end turn portion of the coil spring 2 and covers the end turn portion, and the first claw portion 32B and the second claw portion 33B each extending from one of the ends of the covering portion 31A in such a manner that the tips thereof are separated from each other is disposed in the end turn portion having a prismatic shape. According to the second modification, since the covering tube is attached to the end turn portion via the slit formed by the first claw portion 32B and the second claw portion 33B and the covering portion 31A is in close contact with the wire member, the durability of the covering tube can be secured, and the covering tube can efficiently cover the wire member.

Furthermore, according to the second modification, when the covering portion 31A is covering the wire member, a gap is formed between the covering portion 31A and the wire member along the outer shape of the wire member. Therefore, for example, in a case where the wire member (end turn portion) has a sharp portion (for example, a portion whose cross-sectional shape forms a right angle), it is possible to suppress damage to the covering tube 3B due to crimping.

Note that, in the second modification, an adhesive agent for bonding the covering portion 31A and the wire member, a spacer, or the like may be disposed in the gap between the covering portion 31A and the wire member. As the adhesive agent, for example, a hot-melt type adhesive agent can be used.

### (Third Modification)

Next, a third modification of the embodiment of the present invention will be described with reference to FIG. 8. FIG. 8 is a cross-sectional view of a coil spring included in a spring member according to the third modification of the embodiment of the present invention. The spring member according to the third modification includes a coil spring 2A instead of the coil spring 2 according to the embodiment. Hereinafter, portions different from those of the embodiment will be described, and the same components are denoted by the same reference numerals, and description thereof will be omitted.

The coil spring 2A includes a first end turn portion 21A including a first end of the coil spring 2A, a second end turn portion (not illustrated) included at a second end of the coil spring 2, and an effective portion 22 (see FIG. 2) included between the first end turn portion 21A and the second end turn portion.

In the first end turn portion 21A, in a cross section having a plane orthogonal to the longitudinal direction of the wire member as a cut surface, the shape formed by the outer edge is semicircular. As described above, in the third modification, the first end turn portion 21A extends with a cross-sectional shape partially having a flat surface.

In the third modification, a side surface portion of a covering portion 31 of a covering tube 3 has a shape corresponding to the curved portion of the first end turn portion 21A. At this point, in the third modification, for example, a first claw portion 32 and a second claw portion 33 of the covering tube 3 are locked to the flat portion of the first end turn portion 21A, whereby the covering tube 3 is disposed in a part of the coil spring 2A. Note that the covering tube 3A or 3B may be disposed instead of the covering tube 3.

According to the third modification, since the covering tube is disposed in the end turn portion (in this example, the first end turn portion 21A) of the coil spring 2A to obtain the spring member, even in a case where the cross-sectional shape of the end turn portion is different from that of the embodiment, the durability of the covering tube can be secured, and the covering tube can efficiently cover the wire member.

### (Fourth Modification)

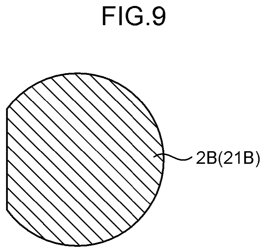

Next, a fourth modification of the embodiment of the present invention will be described with reference to FIG. 9. FIG. 9 is a cross-sectional view of a coil spring included in a spring member according to the fourth modification of the embodiment of the present invention. The spring member according to the fourth modification includes a coil spring 2B instead of the coil spring 2 according to the embodiment. Hereinafter, portions different from those of the embodiment will be described, and the same components are denoted by the same reference numerals, and description thereof will be omitted.

The coil spring 2B includes a first end turn portion 21B including a first end of the coil spring 2B, a second end turn portion (not illustrated) included at a second end of the coil spring 2, and an effective portion 22 (see FIG. 2) included between the first end turn portion 21B and the second end turn portion.

In the first end turn portion 21B, in a cross section having a plane orthogonal to the longitudinal direction of the wire member as a cut surface, the shape formed by the outer edge is the shape of a circle a part of which is missing. The cross section of the first end turn portion 21B has, for example, a shape obtained by cutting a virtual circle with a straight line extending in a direction orthogonal to the radial direction passing through a position other than the center. As described above, in the fourth modification, the first end turn portion 21B extends with a cross-sectional shape partially having a flat surface.

In the fourth modification, a side surface portion of a covering portion 31 of a covering tube 3 has a shape corresponding to the curved portion of the first end turn portion 21B. At this point, in the fourth modification, for example, a first claw portion 32 and a second claw portion 33 of the covering tube 3 are locked to the flat portion of the first end turn portion 21B, whereby the covering tube 3 is disposed in a part of the coil spring 2B. Note that the covering tube 3A or 3B may be disposed instead of the covering tube 3.

According to the fourth modification, since the covering tube is disposed in the end turn portion (in this example, the first end turn portion 21B) of the coil spring 2B to obtain the spring member, even in a case where the cross-sectional shape of the end turn portion is different from that of the embodiment, the durability of the covering tube can be secured, and the covering tube can efficiently cover the wire member.

Note that application is possible as long as the cross-sectional shape of the end turn portion includes a deformed region having at least two corners in at least a part thereof, the corners formed into a recessed shape or a protruding shape in which the claw portions can be locked, such as a shape having an angular shape, a shape obtained by cutting out a part of an ellipse, or a shape having a plurality of corners along the circumferential direction, in addition to the cross-sectional shapes illustrated in the third and fourth modifications. Moreover, the covering tubes can be applied not only to the end turn portions described above but also to one requiring covering for a part of a wire member. In this case, a covering portion of the covering tube is designed depending on the shape of a covered portion.

Although the embodiment for carrying out the present invention has been described above, the present invention should not be limited only by the above-described embodiment. In the embodiment described above, the example in which the covering tube 3 is disposed in the second winding has been described; however, one or a plurality of covering tubes can be arranged at positions where generation of abnormal noise can be suppressed, such as disposing the covering tube 3 in the first winding or the third winding.

Furthermore, in the covering tube according to the above-described embodiment or modifications, surface processing may be performed in such a manner as to form an uneven shape on surfaces facing each other and/or surfaces facing the coil spring among the outer surfaces of the covering portion, particularly, on surfaces of the second and/or third side surface portions that can come into contact with the covering tube of another winding or the coil spring when the coil spring is compressed. The surface processing in this case can be emboss processing or the like. Furthermore, the uneven shape has higher surface roughness than that of other portions other than the processed portion.

By such surface processing, it is possible to further suppress generation of abnormal noise when the coil spring made of a wire member having a cross section having at least two corners is compressed and comes into contact with the covering tube or the coil spring of another winding.

Furthermore, in the above-described embodiment, the example in which the claw portions are arranged on the inner circumferential side of the coil spring has been described; however, the claw portions may be arranged at another position such as the outer circumferential side.

Furthermore, in the above-described embodiment, the example in which the claw portions extend away from the hollow space formed by the covering portion has been described; however, the claw portions may extend toward the hollow space formed by the covering portion.

In addition, in the above-described embodiment, the claw portions can have various cross-sectional shapes having a plane parallel to the thickness direction as a cut surface. For example, a claw portion may have corners at the tip chamfered or may have a tapered shape tapered toward the tip.

Furthermore, in the above-described embodiment, the claw portions of the covering tube may be formed continuously or intermittently with respect to the ends of the covering portion 31.

Alternatively, a tube may be created in which claw portions are partially formed corresponding to a portion of transition from a deformed region to a region outside the deformed region (in this example, for example, corresponds to the effective portion) in a wire member.

As described above, the present invention can include various embodiments and the like not described herein, and various design modifications and the like can be made without departing from the technical idea specified by the claims.

### Industrial Applicability

As described above, the covering tube and the spring member according to the present invention have durability and are suitable for efficiently covering a wire member.

### Reference Signs List

1 SPRING MEMBER
2, 2A, 2B COIL SPRING
3, 3A, 3B COVERING TUBE
21, 21A, 21B FIRST END TURN PORTION
22 EFFECTIVE PORTION
31 COVERING PORTION
32, 32A, 32B FIRST CLAW PORTION
33, 33A, 33B SECOND CLAW PORTION

## Claims

1. A covering tube for covering a wire member, the covering tube comprising:
a covering portion configured to cover a part of the wire member in a circumferential direction, the covering portion having a tubular shape in which a part of the covering tube in the circumferential direction is opened;
a first claw portion extending from a first end of an opening end of the covering portion; and
a second claw portion extending from a second end of the opening end of the covering portion, wherein
tips of the first and second claw portions are separated from each other.

2. The covering tube according to claim 1, wherein a length of each of the first and second claw portions extending from the covering portion is less than or equal to three times a thickness of the covering portion.

3. The covering tube according to claim 1 or 2, wherein the first and second claw portions extend toward each other and away from a hollow space formed by the covering portion.

4. The covering tube according to claim 1, wherein surfaces facing each other among outer surfaces of the covering portion have an uneven shape.

5. A spring member comprising:
a coil spring made of a spirally wound wire member; and
a covering tube configured to cover a part of the coil spring, wherein
the coil spring includes a deformed region provided at least at one end and having at least two corners in a cross section having a plane orthogonal to a longitudinal direction of the wire member as a cut surface,
the covering tube includes:
a covering portion configured to cover a part of the deformed region in a circumferential direction, the covering portion having a tubular shape in which a part of the covering tube in the circumferential direction is opened,
a first claw portion extending from a first end of an opening end of the covering portion, and
a second claw portion extending from a second end of the opening end of the covering portion, and
the first and second claw portions have tips separated from each other.

6. The spring member according to claim 5, wherein surfaces facing each other among outer surfaces of the covering portion and/or surfaces facing the coil spring have an uneven shape.
